# FASCICULE DE BREVET EUROPEEN

(11) **EP 0 836 909 B1**
(45) Date de publication et mention de la délivrance du brevet: **22.01.2003**
(21) Numéro de dépôt: 97402386.3
(22) Date de dépôt: 10.10.1997
(51) Int. Cl.: B23Q 11/08, B23Q 5/38, F16P 3/02

(54) **Protecteur pour machines-outils**
Schutzabdeckung für Werkzeugmaschinen
Protective cover for machine tools

(30) Priorité: 18.10.1996 ES 9602210
(43) Date de publication de la demande: 22.04.1998
(73) Titulaire: D+S SISTEMAS, S. COOP., 20870 Elgoibar (Guipuzcoa) (ES)
(72) Inventeur: Royo Ocon, Miguel, 20820 Deva (Guipuzcoa) (ES)
(74) Mandataire: Thévenet, Jean-Bruno

(56) Documents cités:
- EP-A- 0 407 599
- DE-A- 3 620 765
- US-A- 4 722 452
- US-A- 5 560 415

## Description

La présente invention se rapporte à un protecteur pour machines-outils, du type des protecteurs qui couvrent la zone de l'arbre de travail en évitant que les copeaux et autres résidus ne pénètrent à l'intérieur de la machine.

On connaît, par le brevet allemand DE 954 304, la réalisation d'un protecteur télescopique, formé d'une série de tôles repliées en "U" inversé et qui sont reliées entre elles au moyen de ciseaux articulés ; de sorte que, lorsque ces ciseaux se mettent en extension ou se replient, il se produit le déploiement ou le repliage télescopique des différentes tôles, avec des mouvements selon un axe "X".

Dans cette même ligne, on connaît aussi le brevet allemand DE 957 709 dans lequel on incorpore entre les tôles en U des couvre-joints que l'on appellera des raclettes qui empêchent le passage des copeaux et des résidus entre lesdites tôles.

Dans le brevet français FR 922 630, on décrit une solution de protecteur qui accompagne les mouvements de l'arbre de travail de la machine selon deux axes "X" et "Y", au moyen d'un système de bandes enroulables.

De même, et avec possibilité de mouvements selon les axes "X" et "Y", on connaît les brevets allemands DE 3713058 et 4405247. Dans ces deux brevets, on applique une caractéristique commune, qui est le montage des tôles protectrices selon une disposition en pyramide dans laquelle l'arbre de travail de la machine est solidaire de la petite tôle, à partir de laquelle les autres tôles partent en se dirigeant vers l'extérieur, en donnant naissance à une conformation en tronc de pyramide inversé, que nous appellerons dorénavant une pyramide concave, et dans laquelle la tôle solidaire de l'arbre de travail se trouve dans la disposition la plus reculée par rapport aux autres tôles.

Cette disposition en pyramide concave donne lieu à une série de problèmes qui seront énumérés ci-après :
a. - Du fait que la tôle solidaire de l'arbre de travail se trouve dans la position la plus reculée, cette tôle glisse vers l'arrière par rapport à la tôle qui lui est immédiatement supérieure. Pour cette raison, cette tôle solidaire de l'arbre de travail doit être totalement lisse et elle ne peut porter aucune partie saillante.
b. - Pour accéder à la partie de l'arbre de travail qui est recouverte par la tôle solidaire dudit arbre, on doit démonter cette tôle, ce qui représente un travail lent et compliqué, parce qu'il exige le démontage préalable des autres tôles qui sont disposées en avant de celle-ci. Ceci rend les travaux d'entretien et de réparation beaucoup plus difficiles.
c. - La tôle solidaire de l'arbre de travail est celle qui reçoit le plus de coups et d'impacts de la part des copeaux émis par le processus d'usinage, en raison de la proximité de ladite tôle par rapport audit arbre de travail. On a estimé que cette tôle reçoit de l'ordre de 60 % de la totalité des copeaux formés. Ceci implique une détérioration plus rapide de la surface de cette tôle ; de sorte qu'elle doit être remplacée avant le reste, ce qui, comme on l'a indiqué au point précédent, constitue un travail compliqué, puisque cette tôle se trouve dans la position la plus reculée par rapport aux autres tôles.
   D'un autre côté, la plus forte détérioration de cette tôle et le fait qu'elle glisse vers l'arrière par rapport à la tôle contiguë impliquent dans de nombreux cas une détérioration des raclettes situées entre ces tôles.
d. - La disposition en pyramide concave du protecteur donne lieu à un effet "d'entonnoir" de sorte qu'une grande partie des copeaux projetés se collent et s'accumulent sur ce protecteur, ce qui détériore plus rapidement les différentes parties du protecteur et rend plus difficile l'évacuation finale des copeaux.

Face à cette disposition traditionnelle, la présente invention a pour objet un protecteur ayant une disposition en tronc de pyramide positif, tel que celui décrit dans le brevet allemand DE 3620765, suivant le préambule de la revendication 1, que nous appellerons dorénavant une pyramide convexe, de sorte que la tôle solidaire de l'arbre de travail de la machine occupe la position avancée par rapport aux autres tôles.

Concrètement et selon la solution proposée ici, le protecteur est composé de trois tôles, dont la première, ou la plus avancée, est celle qui est solidaire de l'arbre de travail, et la troisième, ou la plus reculée, est fixe.

Avec cette disposition, on obtient les améliorations suivantes :
A. - Meilleur accès à la partie intérieure de l'arbre de travail, à laquelle on parvient en retirant simplement la tôle la plus extérieure, qui est celle solidaire de l'arbre de travail, ce qui facilite les travaux d'entretien et de réparation, aussi bien du protecteur lui-même que du reste des organes de la machine.
B. - La tôle solidaire de l'arbre de travail peut être facilement remplacée et elle est précisément la tôle qui subit la plus forte détérioration.
   En outre, du fait que cette tôle se trouve dans la position avancée, elle ne glisse en arrière d'aucune des autres tôles, de sorte que, même si sa surface se détériore, ceci n'affecte pas les raclettes.
C. - La tôle solidaire de l'arbre de travail peut porter sur elle d'autres éléments saillants, d'assistance de l'usinage, tels que des buses de pulvérisation, des poignées, des équipements de mesure, des dispositifs d'éclairage, des carcasses de recouvrement, etc., du fait que ces éléments ne font pas obstacle aux mouvements de cette tôle, puisque celle-ci se trouve dans la position la plus extérieure.
   De plus, on a prévu que, sur cette tôle, sont disposés d'autres moyens de protection selon l'axe "Z", de sorte que ces moyens et le protecteur proprement dit, se déplacent avec l'arbre de travail selon les trois axes "X", "Y" et "Z".
   De même, et étant donné qu'aucun autre élément du protecteur ne glisse en avant de la tôle assemblée à l'arbre de travail, cette tôle peut évoluer vers une construction plus complète, c'est-à-dire qu'elle n'est plus une simple tôle mais qu'elle présente des nervures raidisseuses ou une autre conformation analogue sur sa surface extérieure.
D. - D'un autre côté, avec la solution qui est proposée ici, on élimine l'effet "d'entonnoir" et toutes les conséquences négatives que cet effet comporte, puisque, du fait que le protecteur présente une disposition en pyramide convexe, les copeaux tendent à s'évacuer.

En supplément de cette nouvelle disposition du protecteur, et également en accord avec la présente invention, on a amélioré les mécanismes permettant d'obtenir le mouvement des différentes tôles qui constituent le protecteur.

En effet, selon la présente invention, et contrairement aux ciseaux articulés, on dispose maintenant de mécanismes formés chacun d'une paire de branches qui, à une extrémité, sont assemblées à des points d'articulation et qui, à leur autre extrémité, sont liées entre elles et à la tôle correspondante par l'intermédiaire d'un dispositif à pignon et crémaillère.

De cette façon, pour un protecteur composé de trois tôles, la solution traditionnelle de pyramide concave et de ciseaux articulés nécessite, pour chaque ciseau, sept articulations, habituellement à frottement, contre deux articulations à frottement et trois à roulement du mécanisme selon la présente invention.

Cette différence présente ses avantages surtout lorsqu'on désire travailler à des vitesses élevées, puisque, dans ce cas, les articulations doivent être réalisées avec des roulements.

D'un autre côté, l'utilisation de ciseaux articulés implique que, lorsque le protecteur atteint des positions extrêmes, avec un ciseau entièrement déployé et l'autre entièrement replié, ce dernier sort du plan de travail, ce qui ne se produit pas avec le mécanisme de la présente invention. Il est à observer que la largeur de la machine est une caractéristique fondamentale d'une unité d'usinage, puisqu'elle permet de ramener à un minimum l'espace occupé par la ligne de machines.

De même, avec la solution proposée ici, les exigences d'usinage et de montage sont moindres. En effet, avec les ciseaux, les tolérances de fabrication, aussi bien celles des tôles que celles des branches des ciseaux, sont très serrées pour pouvoir obtenir un bon fonctionnement, puisque, dans le cas où la branche d'un ciseau est légèrement hors cote, la nécessité de faire coïncider les distances des branches à la fixation de l'axe d'articulation rendraient le montage plus difficile et perturberait le bon fonctionnement.

La figure 1 montre, selon une vue en perspective schématique, la réalisation connue de ce type de protecteur en pyramide concave.

La figure 2 est une vue en perspective schématique de la solution objet de la présente invention, qui permet de reconnaître la disposition en pyramide convexe.

La figure 3 montre une vue en élévation des trois plaques 1, 2 et 3 qui composent le protecteur, avec la paire de mécanismes 5.

La figure 4 est une vue de détail des éléments fondamentaux qui composent chacun des mécanismes 5 représentés sur la figure 3.

La figure 5 est une coupe partielle qui montre en détail et selon une représentation schématique les crémaillères 5' et le pignon 5" de l'un des deux mécanismes 5.

La figure 6 est une vue en perspective du protecteur, avec des éléments complémentaires 6 disposés sur la tôle 1 qui est solidaire de l'arbre de travail 4.

La figure 7 montre le profil de la figure 6, pour permettre de reconnaître la disposition d'une bande 10 de protection sur l'axe "Z".

L'objet de la présente invention est un protecteur destiné à recouvrir la zone de travail d'une machine-outil.

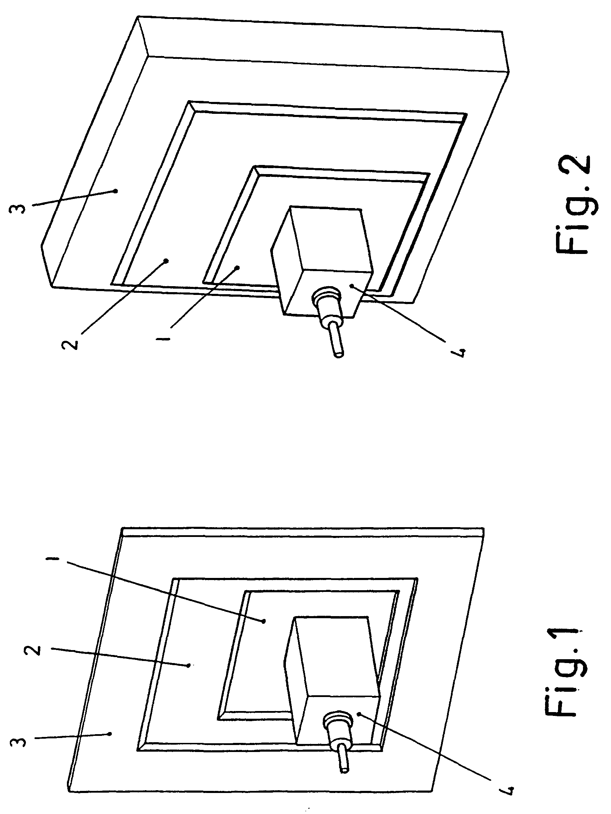

Sur la figure 1, on a représenté schématiquement une solution d'un protecteur, conforme à un système déjà connu, qui se compose de tôles 1, 2 et 3, dont la tôle 1 est solidaire de l'arbre de travail 4 de la machine-outil correspondante, tandis que la tôle 3 est fixe.

La tôle intermédiaire 2 se déplace avec l'arbre de travail 4 entre les tôles 1 et 3, ce pourquoi on dispose de ciseaux articulés, non représentés qui, à une extrémité, sont assemblés à la tôle fixe 3 au moyen d'un axe d'articulation et, à l'autre extrémité, sont assemblés de la même façon à la tôle 1 et, tandis qu'en leurs points intermédiaires, ils sont assemblés de façon également articulée aux tôles intermédiaires qui, dans l'exemple de la figure 1, et pour simplifier l'explication, sont constituées par une unique tôle intermédiaire 2. Entre les tôles 1, 2 et 3, sont disposée des raclettes qui couvrent l'espace libre entre les tôles, pour éviter que des copeaux et résidus de l'usinage ne s'infiltrent dans l'espace entre les tôles 1 et 2 ou entre les tôles 2 et 3 en passant par le vide ou l'espace libre existant entre ces tôles.

Dans cette solution, la tôle extérieure et fixe 3 se trouve dans une position avancée par rapport à la tôle intermédiaire 2, et il est de même pour celle-ci par rapport à la tôle 1, en donnant lieu, comme on le reconnaît sur la figure 1, à une disposition en pyramide concave.

Cette disposition en pyramide concave donne lieu à un effet "d'entonnoir", de sorte qu'une grande partie des copeaux projetés adhèrent au protecteur et y restent, ce qui, joint au fait que, par suite de sa proximité par rapport à l'arbre de travail 4, la tôle reçoit de l'ordre de 60 % des impacts des éléments qui se détachent de la pièce usinées, entraîne une détérioration rapide de cette tôle 1.

La détérioration de la tôle 1 a un effet négatif sur les raclettes qui doivent être à ajustement glissant sur la surface de ladite tôle 1 mais, en outre, lorsqu'arrive le moment où l'on a à remplacer ou à réparer la tôle 1, ceci donne lieu à un grave problème résultant de la complexité et de la lenteur de l'opération de démontage de la tôle 1 puisque, pour la démonter, il est nécessaire de démonter préalablement les tôles 2 et 3.

Dans la solution objet de la présente invention, le protecteur se monte de la façon représentée schématiquement sur la figure 2, c'est-à-dire avec une disposition en pyramide convexe, c'est-à-dire de sorte que la tôle 1, solidaire de l'arbre de travail 4 occupe la position la plus avancée par rapport aux tôles 2 et 3.

De cette façon, les résidus et éléments qui sont projetés contre la tôle 1 sont évacués par leur propre inertie vers les tôles 2 et 3, de sorte qu'on évite l'effet "d'entonnoir" et que, de cette façon, on réduit la détérioration de la tôle 1, ainsi que celle des tôles 2 et 3.

Dans chaque cas, et lorsqu'arrive le moment où il est nécessaire de démonter la tôle 1, pour la réparer ou la remplacer ou encore pour accéder aux éléments intérieurs de l'arbre 4 de la machine, on peut démonter la tôle 1 sans agir sur les tôles 2 et 3, ce qui simplifie grandement cette opération.

En outre, en réduisant la détérioration de la tôle 1, on allonge la vie utile des raclettes disposées entre cette tôle et la tôle intermédiaire 2.

Pour réaliser cette disposition en pyramide convexe, on a recouru à des mécanismes d'assemblage entre les tôles 1, 2 et 3 qui sont différents des ciseaux articulés déjà connus.

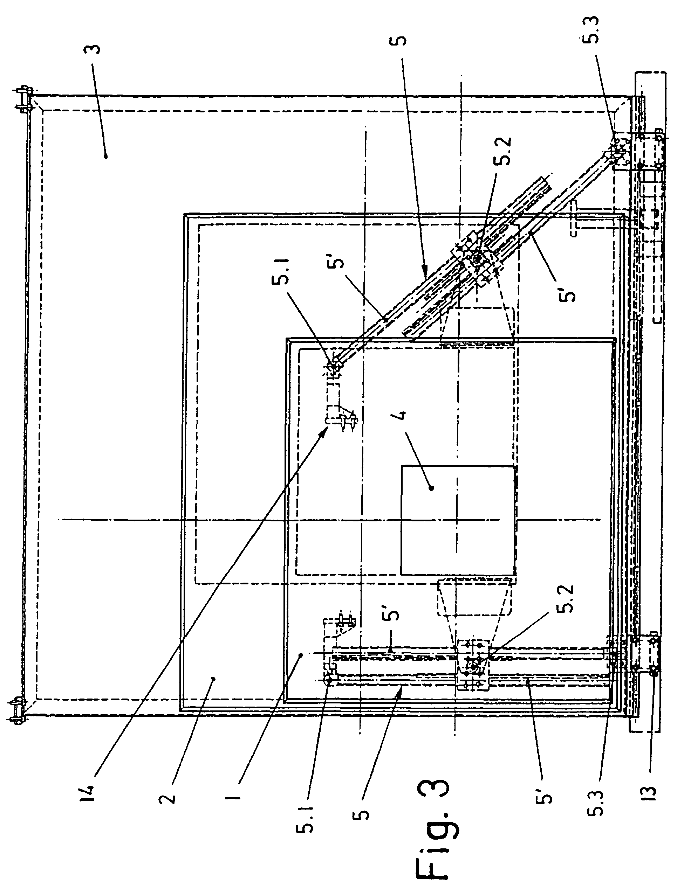

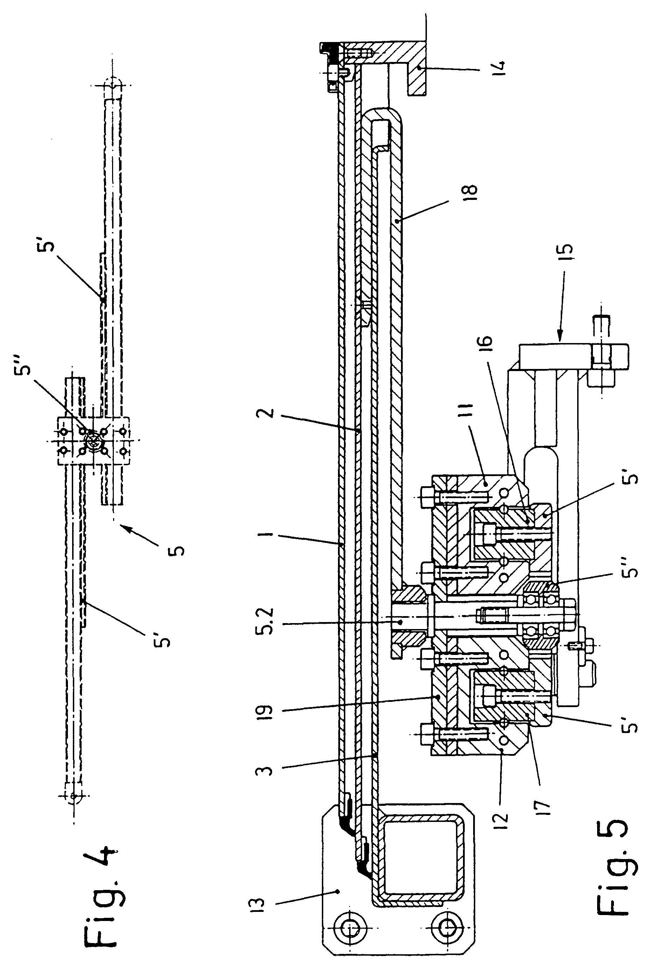

Sur la figure 3, on voit que ce mécanisme se compose de deux ensembles 5 dont chacun est formé de crémaillères 5' et d'un pignon 5", comme représenté sur les figures 4 et 5.

Des deux crémaillères 5' de chaque ensemble 5, l'une est libre à une extrémité et assemblée à la tôle 1 par l'articulation 5.1 ; tandis que l'autre est également libre à une extrémité et assemblée à la tôle fixe 3 au moyen de l'articulation 5.3.

Dans les deux crémaillères 5', engrène le pignon 5" dont l'arbre 5.2 est assemblé de façon articulée à la tôle intermédiaire 2.

Comme on peut le voir sur la figure 5, les deux crémaillères 5' de chacun des deux mécanismes 5 sont montées dans des rails respectifs 16 et 17 appartenant à des patins à roulement 11 et 12 supportés par une plaque commune 19 qui se monte en tirant parti de l'arbre 5.2 du pignon 5".

Le rail 17 est solidaire de la tôle 1 et, par conséquent, de la console ou du chariot de l'arbre de travail 4, tandis que le rail 16 est solidaire de la tôle fixe 3.

Sur cette figure 5, on voit aussi que la tôle intermédiaire 2 est assemblée à l'arbre 5.2 du pignon 5" par la pièce 18.

D'un autre côté, sur cette figure 5, on a indiqué par la référence 13 la structure qui supporte la tôle fixe 3 ; tandis que la référence 14 correspond à l'élément d'assemblage de la tôle 1 à la console ou au chariot de l'arbre de travail 4 et la référence 15 désigne les éléments d'assemblage de la crémaillère 5'et du patin à roulement 12, à la tôle 1 et, par conséquent, à la console ou au chariot de l'arbre de travail 4.

Avec ce mécanisme, un mouvement de l'arbre de travail 4 de la machine se traduit par un mouvement de la tôle 1 et, avec celui de cette tôle, par un mouvement de la tôle 2 selon les axes "X" et "Y".

Pour pouvoir démonter la tôle 1, il suffirait de démonter son assemblage sur les deux articulations 5.1 et son assemblage sur l'axe 4, sans qu'il soit nécessaire de démonter les tôles 2 et 3.

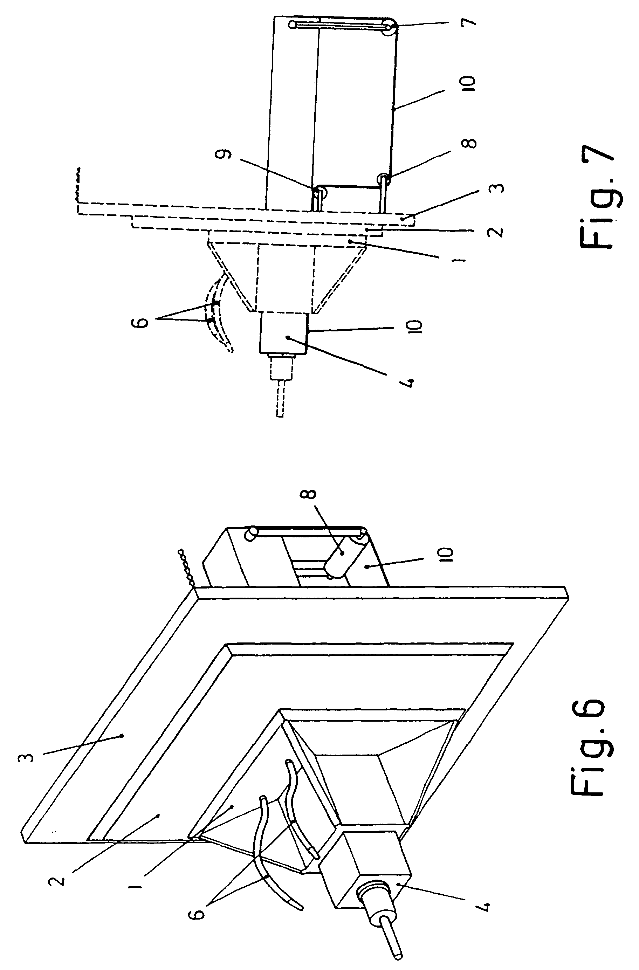

D'un autre côté, et du fait que, de cette façon, la tôle 1 occupe la position la plus avancée, la tôle 1 n'a pas à rentrer en arrière de la tôle mais qu'au contraire, maintenant, elle glisse sur cette dernière, de sorte qu'il n'y a pas d'inconvénient à ce que cette tôle 1 ne soit pas parfaitement plane dans sa zone supérieure. La face supérieure de la tôle 1 peut donc présenter des nervures raidisseuses ou une autre conformation analogue qui lui confère une plus grande rigidité, voir figure 6.

En outre, sur la figure 6, on peut voir que, sur la tôle 1, on peut monter des éléments d'aide à l'usinage comme des poignées 6, des équipements de mesure, des moyens d'éclairage, etc.

Cette solution permet donc de réaliser une protection, non seulement selon les axes "X" et "Y" mais aussi selon l'axe "Z". En effet, comme on peut le voir sur les figures 6 et 7, qui représentent un exemple possible, non limitatif, de réalisation pratique, le protecteur présente un ensemble de galets 7, 8 et 9 entre lesquels s'étend une bande 10 d'acier ou de matière synthétique ou même du type persienne enroulable, ou de n'importe quelle autre solution classique analogue.

La bande 10 est assemblée à ses deux extrémités aux deux extrémités de l'arbre de travail 4 d'une machine-outil ; tandis que, comme on peut le voir sur la figure 7, le galet 8 est monté sur un support qui est solidaire de la tôle fixe 3 du protecteur et que les galets 7 et 9 sont disposés sur des supports solidaires de la console de l'arbre 4 ou porte-outils de la machine-outil correspondante.

Avec cette disposition, lorsque l'arbre 4 se déplace selon la direction de l'axe "Z", la protection constituée par la bande 10 voyage avec elle, en protégeant ainsi la face du porte-outil qui présente les organes de guidage sensibles aux salissures.

Le système de galets 7, 8 et 9 permet de réduire les frottements à un minimum lorsque l'arbre porte-outil 4 se déplace dans la direction "Z".

## Revendications

1. Protecteur pour machines-outils, du type constitué par un ensemble de tôles dont la tôle extérieure est fixe et la plus intérieure est solidaire de l'arbre de travail de la machine-outil correspondante, en se déplaçant avec cet arbre, avec la tôle correspondante ou avec des tôles intermédiaires, selon les axes « X » et « Y » perpendiculaires à l'axe de l'arbre de travail, ces tôles étant assemblées entre elles par l'intermédiaire de moyens de liaison, le protecteur étant constitué par trois tôles (1, 2 et 3) dont une tôle (3) est la tôle extérieure ou fixe et une autre tôle (1) est solidaire de l'arbre de travail (4), cette dernière tôle (1) se trouvant dans une position avancée par rapport aux deux autres tôles (2 et 3), le protecteur présentant ainsi une disposition pyramidale convexe, **caractérisé en ce que** les moyens de liaison des tôles (1, 2 et 3) étant une paire de mécanismes (5) à pignon et crémaillère, chaque mécanisme à pignon et crémaillère (5) se composant d'un pignon (5") dont l'arbre de rotation (5.2) est assemblé à la tôle intermédiaire (2) et de crémaillères correspondantes (5') qui, à une extrémité, sont libres et, à l'autre extrémité, sont assemblées aux tôles (1 et 3) respectivement par l'intermédiaire d'articulations respectives (5.1 et 5.3).

2. Protecteur pour machines-outils selon la revendication 1, **caractérisé en ce qu'**on a prévu une bande (10) qui, à ses extrémités, est solidaire de la console de l'arbre de travail (4), cette bande (10) circulant sur un système de galets (7, 8 et 9), tout ceci de manière que la bande (10) se déplace conjointement avec l'arbre de travail (4) dans les déplacements de ce dernier dans la direction de l'axe cartésien "Z".

3. Protecteur pour machines-outils selon la revendication 1, **caractérisé en ce qu'**on a prévu que, sur la surface extérieure de la tôle (1), qui est solidaire de l'arbre de travail (4), sont montés des éléments d'aide à l'usinage, tels que des poignées (6).

4. Protecteur pour machines-outils selon la revendication 1, **caractérisé en ce que** les crémaillères (5') de chaque mécanisme (5) sont montées dans autant de rails (16, 17) de patins à roulement respectifs (11 et 12) supportés par une plaque commune (19) qui est traversée par l'arbre (5.2) du pignon (5").

## Patentansprüche

1. Schutzabdeckung für Werkzeugmaschinen, gebildet durch eine Anordnung von Flächen, von denen das Außenblech fest steht und das innerste Blech mit der Arbeitsspindel der zugehörigen Werkzeugmaschine verbunden ist, um sich zusammen mit dieser Spindel, mit dem entsprechenden Blech oder mit Zwischenblechen entlang den Achsen "X" und "Y" rechtwinklig zu der Achse der Arbeitsspindel zu verlagern, wobei diese Bleche untereinander durch Verbindungsmittel zusammengefügt sind, wobei die Schutzabdeckung durch drei Bleche (1, 2 und 3) gebildet wird, von denen ein Blech (3) das äußere oder fest stehende Blech ist und ein weiteres Blech (1) mit der Arbeitsspindel (4) verbunden ist, wobei letzteres Blech (1) sich an einer bezüglich der beiden anderen Bleche (2 und 3) vorgerückten Stelle befindet, wodurch die Schutzabdeckung eine pyramidenförmige, konvexe Anordnung aufweist, **dadurch gekennzeichnet, dass** die Verbindungsmittel der Bleche (1, 2 und 3) ein Paar Ritzel-Zahnstangen-Mechanismen (5) ist, von denen jeder Ritzel-Zahnstangen-Mechanismus (5) sich zusammensetzt aus einem Ritzel (5"), dessen Drehwelle (5.2) an einem Zwischenblech (2) angebracht ist und die zugehörigen Zahnstangen (5'), die an einem Ende frei sind, an ihrem anderen Ende über zugehörige Zwischengelenke (5.1 und 5.3) an den entsprechenden Blechen (2 und 3) angebracht sind.

2. Schutzabdeckung für Werkzeugmaschinen nach Anspruch 1,
**dadurch gekennzeichnet, dass** ein Band (10) vorgesehen ist, welches an seinen Enden an dem Träger der Arbeitsspindel (4) angebracht ist, wobei dieses Band (10) über ein System von Rollen (7, 8 und 9) umläuft, derart, dass das Band (10) sich im Verein mit der Arbeitsspindel (4) bei deren Verlagerungen in Richtung der kartesischen Z-Achse verlagert.

3. Schutzabdeckung für Werkzeugmaschinen nach Anspruch 2,
**dadurch gekennzeichnet, dass** auf der Außenfläche des Blechs (1), welches mit der Arbeitsspindel (4) zusammenhängt, Bearbeitungs-Hilfselemente, beispielsweise Handgriffe (6), angebracht sind.

4. Schutzabdeckung für Werkzeugmaschinen nach Anspruch 1,
**dadurch gekennzeichnet, dass** die Zahnstangen (5') jedes Mechanismus (5) in ebenso vielen Schienen (16, 17) zugehöriger Rolllager (11 und 12) gelagert sind, welche von einer gemeinsamen Platte (19) getragen werden, die quer zu der Welle (5.2) des Ritzels (5") verläuft.

## Claims

1. A machine tool guard of the type constituted by a set of metal sheets in which the outer sheet is stationary and the innermost sheet is secured to the work shaft of the corresponding machine tool, moving with said shaft, with the corresponding sheet or with intermediate sheets, along axes X and Y perpendicular to the axis of the work shaft, said sheets being assembled to one another via connection means, the guard being constituted by three sheets (1, 2, and 3) of which sheet (3) is the outer or stationary sheet and another of said sheets (1) is secured to the work shaft (4), said work shaft sheet (1) being in an advanced position relative to the other two sheets (2 and 3), the guard thus presenting a convex pyramid disposition, the guard being **characterized in that** the means for connecting the sheets (1, 2, and 3) together are constituted by a pair of rack-and-pinion mechanisms (5), each rack-and-pinion mechanism (5) comprising a pinion (5") whose rotary shaft (5.2) is assembled to the intermediate sheet (2) and corresponding racks (5') each of which is free at one end and is assembled at its opposite end to a respective one of the sheets (1 and 3) via a respective hinge (5.1 and 5.3).

2. A machine tool guard according to claim 1, **characterized in that** a strip (10) is provided which is secured at its ends to the bracket (4) of the work shaft, said strip (10) travelling on a system of wheels (7, 8, and 9), in such a manner that the strip (10) moves together with the work shaft (4) in its displacements along the Cartesian Z axis.

3. A machine tool guard according to claim 1, **characterized in that** provision is made on the outside surface of the sheet (1) which is fixed to the work shaft (4) for mounting elements that assist in machining, such as handles (6).

4. A machine tool guard according to claim 1, **characterized in that** the racks (5') of each mechanism (5) are mounted in as many rails (16, 17) of shoes having respective bearings (11 and 12) supported by a common plate (19) through which the shaft (5.2) of the pinion (5") passes.
